# EUROPÄISCHE PATENTSCHRIFT

(11) **EP 3 596 367 B1**
(45) Veröffentlichungstag und Bekanntmachung des Hinweises auf die Patenterteilung: **19.05.2021**
(21) Anmeldenummer: 18703690.0
(22) Anmeldetag: 17.01.2018
(51) Int. Cl.: F16K 31/53, F16K 11/085, F16K 31/04

(54) **DREHSCHIEBERVENTIL FÜR DEN EINSATZ IM KFZ-BEREICH**
ROTARY SLIDE VALVE FOR USE IN THE AUTOMOTIVE FIELD
SOUPAPE À TIROIR ROTATIF DESTINÉE À ÊTRE UTILISÉE DANS LE DOMAINE AUTOMOBILE

(30) Priorität: 16.03.2017 DE 102017105696
(43) Veröffentlichungstag der Anmeldung: 22.01.2020
(73) Patentinhaber: Pierburg GmbH, 41460 Neuss (DE)
(72) Erfinder: BADEN, Matthias, 40237 Düsseldorf (DE); SANDERS, Michael, 41564 Kaarst (DE); KREBBER-HORTMANN, Karl, 40221 Düsseldorf (DE)
(74) Vertreter: terpatent Patentanwälte ter Smitten Eberlein-Van Hoof Rütten Daubert
(86) Internationale Anmeldenummer: PCT/EP2018/051093
(87) Internationale Veröffentlichungsnummer: WO 2018/166672

(56) Entgegenhaltungen:
- WO-A1-2015/004646
- CN-Y- 2 428 645
- US-A1- 2004 119 040
- US-A1- 2005 247 900

## Beschreibung

Die Erfindung betrifft ein Drehschieberventil für den Einsatz im Kfz-Bereich mit einem Gehäuse, das mindestens einen Fluideinlass und mindestens einen Fluidauslass aufweist, wobei in dem Gehäuse ein Drehschieberglied drehbar gelagert ist, das mindestens eine Durchlassöffnung aufweist, über die der mindestens eine Fluideinlass mit dem mindestens einen Fluidauslass fluidisch verbindbar ist und wobei eine Antriebsvorrichtung vorgesehen ist, wobei die Antriebsvorrichtung über Koppelmittel das Drehschieberglied in Umfangsrichtung antreibt, wobei das Gehäuse durch ein topfförmiges Deckelteil abgeschlossen ist, wobei ein Topfbodenteil in das Gehäuse hineinreicht und über einen Topfzylinderteil mit einem Topfrandabschnitt verbunden ist, der am Gehäuse anliegt, wobei an der Innenseite des Topfzylinderteils ein Statororgan der Antriebsvorrichtung und an der Außenseite des Topfzylinderteils ein Rotororgan der Antriebsvorrichtung vorgesehen ist und wobei das Rotororgan über die Koppelmittel mit dem Drehschieberglied wirkverbunden ist.

Drehschieberventile der eingangs genannten Art sind aus dem Stand der Technik hinlänglich bekannt. Sie werden beispielsweise zur Durchsatzregelung eines Kühlmittelkreislaufs verwendet. Diese Drehschieberventile weisen zum Einstellen eines flüssigen oder gasförmigen Volumenstroms in der Mantelfläche des Drehschiebergliedes mindestens eine Drehschleberdurchlassöffnung auf, die je nach Drehwinkelstellung des Drehschiebergliedes mit einem Einlassstutzen und/oder einem Auslassstutzen für das Medium zusammen wirken können. Je nach Winkelstellung wird dabei ein Durchströmungsquerschnitt durch Überschneidung der jeweiligen Drehschleberöffnung mit dem Einlassstutzen oder Auslassstutzen eingestellt.

Aus der gattungsgemäßen internationalen Patentanmeldung WO 2015/004646 A1 ist ein motorbetriebenes Drehschieberventil bekannt, bei dem die Antriebvorrichtung im Gehäuse vorgesehen ist. Darüber hinaus offenbart die amerikanische Offenlegungsschrift US 2004/0119040 A1 ein Getriebe als Koppelmittel zwischen der Antriebseinrichtung und dem Drehschieberglied. Aus der CN 2428645Y ist ein Drehschieberventil bekannt, welches ein Strömungsgehäuse mit zwei Einlässen und zwei Auslässen aufweist. Innerhalb dieses Strömungsgehäuses ist ein Drehschieberglied angeordnet, das am Umfang bogenförmige Ausschnittsbereiche aufweist, die die Einlässe und Auslässe miteinander verbindet oder voneinander trennt. An einem zu den Ausschnittsbereichen entgegen gesetzten axialen Ende des Drehschiebergliedes, ist ein mehrpoliger ringförmiger Permanentmagnet angeordnet, der als Rotor wirkt und der mit einem fluidisch von dem Innenraum des Drehschieberventils getrennt angeordneten Stator zusammenwirkt, der das Strömungsgehäuse an diesem axialen Ende umfänglich umgibt. Des Weiteren ist aus der Druckschrift US 2005/0247900 A1 eine weitere, motorbetriebene Ventilanordnungen bekannt.

Aufgrund des immer geringer werdenden Bauraums in Kraftfahrzeugen und den hohen Anforderungen an die Energieeffizienz, werden immer kompaktere Ventilanordnungen mit kleineren Antriebsvorrichtungen benötigt. Um auch bei kleinen zur Verfügung stehenden Drehmomenten relativ große Kräfte bewegen zu können, ist ein hohes Übersetzungsverhältnis erforderlich, das durch ein Getriebe erreicht werden kann. Hierzu ist es auch bekannt, eine außerhalb des Drehschiebergehäuses angeordnete Antriebsvorrichtung über ein Getriebe mit dem Drehschieberglied zu verbinden. Ein derartiges Drehschieberventil weist jedoch wiederum den Nachteil eines erforderlichen großen Bauraumes auf. Außerdem ist eine Abdichtung der Antriebsvorrichtung zum mit Kühlmittel gefüllten Drehschieberraum erforderlich.

Aufgabe der Erfindung ist es daher, die oben genannten Nachteile zu vermeiden und ein Drehschieberventil bereit zu stellen, das auf einfache und kostengünstige Weise herstellbar ist, einen geringen Bauraum benötigt und durch eine Antriebsvorrichtung mit einer geringen Stromaufnahme antreibbar ist.

Die Aufgabe wird erfinderisch dadurch gelöst, dass die Koppelmittel aus einem Verzahnungsgetriebe bestehen, wobei das Verzahnungsgetriebe als Wellgetriebe ausgeführt ist, wobei das Rotororgan beispielsweise mit einer von einer Kreisform abweichenden, vorzugsweise elliptischen Umfangsform als Wellgenerator ausgeführt ist, auf dem ein flexibles Zahnrad als Flexspline mit einer Außenverzahnung vorgesehen ist. Da sowohl das als Wellgenerator wirkende Rotororgan als auch das Wellgetriebe mit dem Kühlmittel in Berührung stehen kann, ist keine Abdichtung an dem Drehschleberglied erforderlich. Ein verschleißbehaftetes Dichtelement kann hier also entfallen.

In einer vorteilhaften Ausführungsform ist das Statororgan auf einem Zapfentell, das am Topfbodenteil vorgesehen ist, angeordnet.

In einer ersten vorteilhaften Ausführungsform weist das Gehäuse eine Innenverzahnung mit abweichender Anzahl Zähne als die Außenverzahnung des Flexsplines auf, wobei der Flexspline drehfest mit dem Drehschieberglied verbunden ist. In einer zweiten, alternativen Ausführungsform, weist das Drehschieberglied eine Innenverzahnung mit einer abweichenden Anzahl Zähne wie die Außenverzahnung des Flexsplines auf, wobei die Innenverzahnung des Drehschiebergliedes mit der Außenverzahnung des Flexsplines in Eingriff steht. Hierbei kann zur Unterstützung das Gehäuse eine Innenverzahnung aufweisen, die mit der Außenverzahnung des Flexsplines in Eingriff steht. Ob die Innenverzahnung des Gehäuses beziehungsweise des Drehschiebergliedes bei der zweiten Ausführungsform mehr oder weniger Zähne aufweist, beeinflusst lediglich die Drehrichtung des Drehschiebergliedes in Bezug auf den Wellgenerator.

In beiden Ausführungsbeispielen kann der Flexspline mittels einer Lagereinrichtung, wie z. B. einer Gleitlagerung, einer Wälzlagerung oder einer Zahnradlagerung auf dem Rotororgan gelagert sein und das Drehschieberglied zumindest drehbar im Topfbodenteil gelagert sein.

Die Erfindung wird anhand einer Zeichnung näher erläutert, hierbei zeigt:
Figur 1 eine perspektivische Explosionsansicht eines erfindungsgemäßen Drehschieberventils in einer ersten Ausführung,
Figur 2 eine Schnittansicht des Drehschieberventils aus Figur 1,
Figur 3 eine perspektivische Explosionsansicht eines erfindungsgemäßen Drehschieberventils in einer zweiten Ausführungsform, und
Figur 4 eine teilweise geschnittene Perspektivansicht des erfindungsgemäßen Drehschieberventils aus Figur 3.

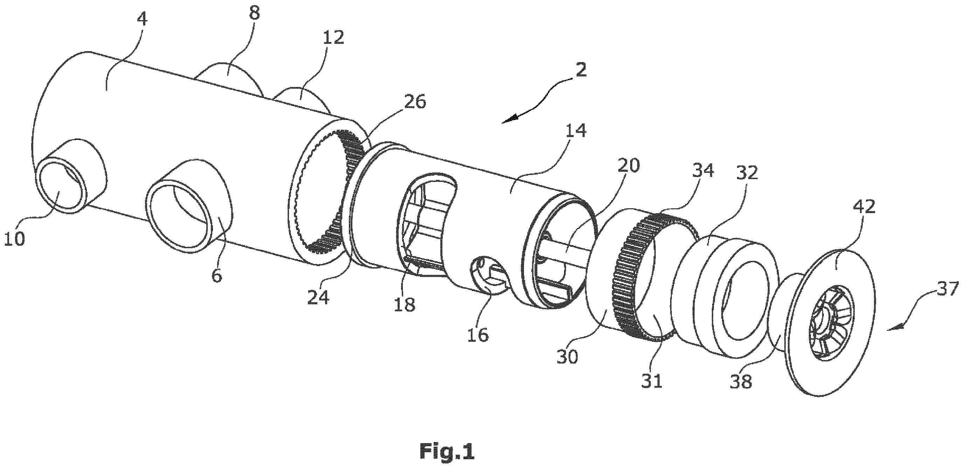

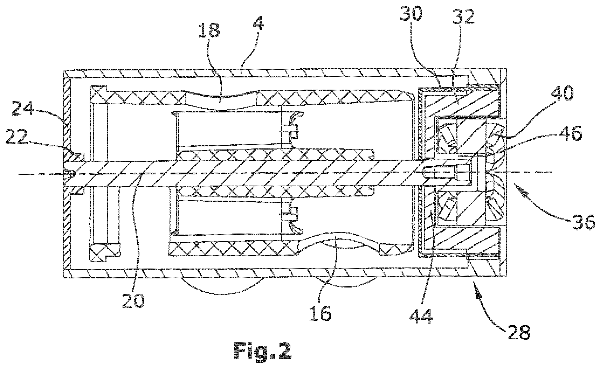

Figur 1 zeigt in einer perspektivischen Explosionsansicht eine erste Ausführungsform eines erfinderischen Drehschieberventils 2. Das Drehschieberventil 2 weist ein Gehäuse 4 auf, das zwei Fluideinlässe 6, 8 und zwei Fluidauslässe 10, 12 aufweist. In Verbindung mit einem Drehschieberglied 14, das in diesem Ausführungsbeispiel zwei Durchlassöffnungen 16, 18 besitzt, können in Verbindung mit nicht weiter dargestellten Kühlleitungen, gewünschte Kühlkreisläufe oder Kurzschlussleitungen angesteuert werden. Das Drehschieberglied 14 ist im vorliegenden Ausführungsbeispiel drehfest mit einer Drehachse 20 verbunden, die unter anderem mit einer Lagerstelle 22 in einem Bodenteil 24 des Gehäuses 4 gelagert ist. Das Gehäuse 4 weist am entgegengesetzten Ende des Bodenteils 24 eine Innenverzahnung 26 auf, die Teil eines als Wellgetriebe 28 ausgeführten Verzahnungsgetriebes ist (siehe hierzu Figur 2). In diesem Zusammenhang sei auch angemerkt, dass das Drehschieberglied 14 an der von der Innenverzahnung 26 abgewandten Seite des Gehäuses 4 während der Montage in das Gehäuse 4 eingeführt wird und danach das Gehäuse durch das Bodenteil 24 abgeschlossen wird, wobei die Drehachse 20 in der Lagerstelle 22 aufgenommen wird. Das Wellgetriebe 28 wird vervollständigt durch ein als Flexspline 30 ausgebildetes flexibles Zahnrad, das hier über eine Gleitlagerung 31 auf einem Rotororgan 32 auf bekannte Weise angeordnet ist. Der Flexspline 30 weist im vorliegenden Ausführungsbeispiel eine Außenverzahnung 34 auf, die zwei Zähne mehr hat, als die Innenverzahnung 26 des Gehäuses 4. Hierdurch wird ein sehr hohes Übersetzungsverhältnis gewährleistet, wobei sehr hohe Drehmomente übertragen werden können, bzw. eine Antriebsvorrichtung 36 (siehe Figur 2) mit geringerer Leistung ausgeführt werden kann. Die Antriebsvorrichtung 36 besteht in vorliegendem Fall aus dem gleichzeitig als Wellgenerator dienenden Rotororgan 32 und einem in einem topfförmigen Deckelteil 37 angeordneten Statororgan 40. Ein Topfzylinderteil 38 des topfförmigen Deckelteils 37 liegt mit einem Topfrandabschnitt 42 am Gehäuse 4 an, wobei ein Topfbodenteil 44 in das Gehäuse 4 hineinreicht derart, dass an der Innenseite des Topfzylinderteils 38 das Statororgan 40 vorgesehen ist. Die Antriebsvorrichtung 36 ist durch eine Kunststoffumspritzung im Topfdeckelteil 37 integriert oder kann durch ein nicht weiter dargestelltes Abdeckteil verschlossen sein. Auf diese Weise besitzt die Antriebsvorrichtung 36 einen Spalttopf, der gleichzeitig als Lagerteil für das Rotororgan 32 dient, das wiederum als Wellgenerator des wellgetriebes 28 dient. Das Topfbodenteil 44 kann darüber hinaus noch eine weitere Lagerstelle 46 aufweisen, in dem die Drehwelle 20 gelagert ist. Auf dieser Lagerstelle ist hier auch noch das Statororgan 40 angeordnet.

Figur 2 zeigt nun insbesondere die Antriebsvorrichtung 36 und das Wellgetriebe 28 des Drehschieberventils 2 in einer Schnittansicht. Deutlich zu erkennen ist hier, wie das als Wellgenerator ausgeführte Rotororgan 32 drehbar auf dem Topfzylinderteil 38 und/oder der Drehwelle 20 angeordnet ist und über die Außenverzahnung 34 des Flexsplines 30 mit der Innenverzahnung 26 des Gehäuses 4 in Eingriff steht. Der Flexspline 30 ist darüber hinaus drehfest mit der Drehwelle 20 verbunden und verstellt auf diese Weise das Drehschieberglied 14.

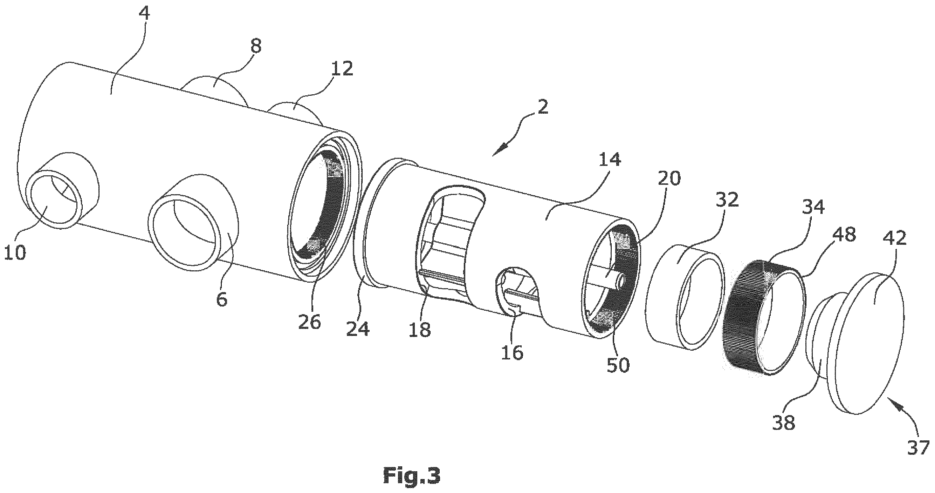

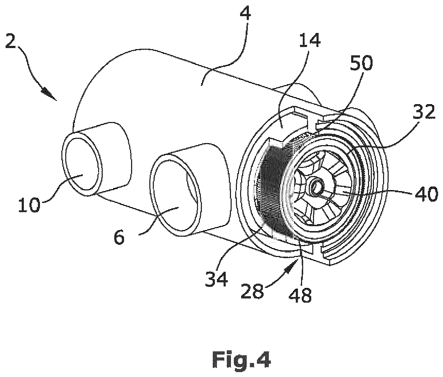

Die Figuren 3 und 4 zeigen eine alternative Ausführungsform des erfindungsgemäßen Drehschieberventils 2 in einer perspektivischen Explosionsansicht und in einer teilweise geschnittenen perspektivischen Ansicht. Diese Ausführungsform unterscheidet sich im Wesentlichen in der Ausführung des Wellgetriebes 28. Ein alternativ ausgeführter Flexspline 48 ist hier lediglich ringförmig bzw. bandförmig ausgeführt und besitzt lediglich eine Breite, die dazu geeignet ist, dass seine Aussenverzahnung 34 sowohl mit der Innenverzahnung 26 des Gehäuses 4 als auch mit einer Innenverzahnung 50 des Drehschlebergliedes 14 in Eingriff steht. Das Rotororgan 32 ist auch in diesem Ausführungsbeispiel nicht drehfest mit der Drehwelle 20 verbunden. Das Drehschieberglied 14 weist im vorliegenden Ausführungsbeispiel eine Innenverzahnung 50 auf, die eine geringere Anzahl Zähne (hier ein Verhältnis von 198:200) aufweist, als die Außenverzahnung 34 des Flexsplines 48. Die Außenverzahnung 34 des Flexsplines 48 stützt sich hierbei an der Innenverzahnung 26 des Gehäuses 4 ab, wobei die Innenverzahnung 26 des Gehäuses 4 genauso viele Zähne aufweist, wie die Außenverzahnung 34 des Flexsplines 48, Das topfförmige Deckelteil 37 ist in Figur 3 geschlossen und in Figur 4 geöffnet dargestellt.

## Patentansprüche

1. Drehschieberventil für den Einsatz im Kfz-Bereich in einem Gehäuse (4), das mindestens einen Fluideinlass (4, 6) und mindestens einen Fluidauslass (8, 10) aufweist, wobei in dem Gehäuse (4) ein Drehschieberglied (14) drehbar gelagert ist, das mindestens eine Durchlassöffnung (16, 18) aufweist, über die der mindestens eine Fluideinlass (4, 6) mit dem mindestens einen Fluidauslass (8, 10) fluidisch verbindbar ist und wobei eine Antriebsvorrichtung (36) vorgesehen ist,
wobei die Antriebsvorrichtung (36) über Koppelmittel (28) das Drehschieberglied (14) in Umfangsrichtung antreibt, wobei das Gehäuse (4) durch ein topfförmiges Deckelteil (37) abgeschlossen ist, wobei ein Topfbodenteil (44) in das Gehäuse (4) hinreicht und über einen Topfzylinderteil (38) mit einem Topfrandabschnitt (42) verbunden ist, der am Gehäuse (4) anliegt, wobei an der Innenseite des Topfzylinderteils (38) ein Statororgan (40) der Antriebsvorrichtung (36) und an der Außenseite des Topfzylinderteils (38) ein Rotororgan (32) der Antriebsvorrichtung (36) vorgesehen ist, und wobei das Rotororgan (32) über die Koppelmittel (28) mit dem Drehschieberglied (14) wirkverbunden ist, **dadurch gekennzeichnet, dass** die Koppelmittel (28) aus einem Verzahnungsgetriebe bestehen, wobei das Verzahnungsgetriebe (28) als Wellgetriebe ausgeführt ist, wobei das Rotororgan (32) beispielsweise mit einer von einer Kreisform abweichenden, vorzugsweise elliptischen Umfangsform als Wellgenerator ausgeführt ist, auf dem ein flexibles Zahnrad (30, 48) als Flexspline mit einer Außenverzahnung (34) vorgesehen ist.

2. Drehschieberventil nach Anspruch 1,
**dadurch gekennzeichnet, dass** das Statororgan (40) auf einer Lagerstelle (46), die am Topfbodenteil (44) vorgesehen ist, angeordnet ist.

3. Drehschieberventil nach einem der vorhergehenden Ansprüche,
**dadurch gekennzeichnet, dass**
das Gehäuse (4) eine Innenverzahnung (26) mit einer abweichenden Anzahl Zähne als die Außenverzahnung (34) des Flexsplines (30) aufweist, wobei der Flexspline (30) drehfest mit dem Drehschieberglied (14) verbunden ist.

4. Drehschieberventil nach einem der vorhergehenden Ansprüche,
**dadurch gekennzeichnet, dass**
das Drehschieberglied (14) eine Innenverzahnung (50) mit einer abweichenden Anzahl Zähne wie die Außenverzahnung (34) des Flexsplines (48) aufweist, wobei die Innenverzahnung (50) des Drehschieberglieds (14) mit der Außenverzahnung (34) des Flexsplines (34) in Eingriff steht.

5. Drehschieberventil nach Anspruch 4,
**dadurch gekennzeichnet, dass**
das Gehäuse (4) eine Innenverzahnung (26) aufweist, die mit der Außenverzahnung (34) des Flexsplines (48) in Eingriff steht.

6. Drehschieberventil nach einem der vorhergehenden Ansprüche,
**dadurch gekennzeichnet, dass**
der Flexspline (30, 48) mittels einer Lagereinrichtung (31), wie z. B. einer Gleitlagerung, einer Wälzlagerung oder einer Zahnradlagerung auf dem Rotororgan (32) gelagert ist.

7. Drehschieberventil nach einem der vorhergehenden Ansprüche,
**dadurch gekennzeichnet, dass**
das Drehschieberglied (14) zumindest drehbar im Topfbodenteil (44) gelagert ist.

## Claims

1. Rotary slide valve for use in the automotive field, in a housing (4) comprising at least one fluid inlet (4, 6) and at least one fluid outlet (8, 10), wherein a rotary slide member (14) is rotatably mounted in the housing (4), having at least one passage opening (16, 18) via which the at least one fluid inlet (4, 6) can be fluidically connected to the at least one fluid outlet (8, 10), and wherein a drive device (36) is provided,
wherein the drive device (36) drives the rotary slide member (14) in the circumferential direction via coupling means (28), the housing (4) being closed by a pot-shaped cover part (37), a pot bottom part (44) extending into the housing (4) and being connected to a pot edge section (42) via a pot cylinder part (38), said pot edge section resting against the housing (4), a stator element (40) of the drive device (36) being provided on the inside of the pot cylinder part (38) and a rotor element (32) of the drive device (36) being provided on the outside of the pot cylinder part (38), and wherein the rotor element (32) is operatively connected to the rotary slide member (14) via the coupling means (28),
**characterized in that**
the coupling means (28) consist of a toothed gear, the toothed gear (28) is designed as a strain wave gear, the rotor element (32) being designed, for example, as a strain wave generator with a preferably elliptical circumferential shape deviating from a circular shape, on which generator a flexible gear wheel (30, 48) is provided as a flexspline with external toothing (34).

2. Rotary slide valve according to claim 1, **characterized in that** the stator element (40) is arranged on a bearing position (46) provided on the pot bottom part (44).

3. Rotary slide valve according to one of the preceding claims, **characterized in that** the housing (4) has an internal toothing (26) with a number of teeth different from the external toothing (34) of the flexspline (30), the flexspline (30) being non-rotatably connected to the rotary slide member (14).

4. Rotary slide valve according to one of the preceding claims, **characterized in that** the rotary valve member (14) has an internal toothing (50) with a number of teeth different from the external toothing (34) of the flexspline (48), the internal toothing (50) of the rotary valve member (14) meshing with the external toothing (34) of the flexspline (48).

5. Rotary slide valve according to claim 4, **characterized in that** the housing (4) has an internal toothing (26) meshing with the external toothing (34) of the flexspline (48).

6. Rotary slide valve according to one of the preceding claims, **characterized in that** the flexspline (30, 48) is mounted on the rotor member (32) by means of a bearing device (31), such as, e.g., a plain bearing, a roller bearing or a gear bearing.

7. Rotary slide valve according to one of the preceding claims, **characterized in that** the rotary slide member (14) is at least rotatably supported in the pot bottom part (44).

## Revendications

1. Soupape à tiroir rotatif pour utilisation dans le secteur automobile, dans un carter (4) comprenant au moins une entrée de fluide (4, 6) et au moins une sortie de fluide (8, 10), un élément à tiroir rotatif (14) étant monté de manière rotative dans le carter (4), ledit élément comprenant au moins une ouverture de passage (16, 18) par laquelle ladite au moins une entrée de fluide (4, 6) peut être relié de manière fluidique à ladite au moins une sortie de fluide (8, 10), et un dispositif d'entrainement (36) étant prévu,
le dispositif d'entrainement (36) entraine l'élément à tiroir rotatif (14) dans la direction circonférentielle par des moyens d'accouplement (28), le carter (4) étant fermé par une partie de couvercle en forme de coupelle (37), une partie de base de coupelle (44) s'étendant dans le carter (4) et étant reliée à une section de rebord de pot (42) par une partie de cylindre de coupelle (38), ladite section de rebord reposant contre le carter (4), un élément de stator (40) du dispositif d'entrainement (36) étant prévu sur l'intérieur de la partie de cylindre de coupelle (38) et un élément de rotor (32) du dispositif d'entrainement (36) étant prévu sur l'extérieur de la partie cylindrique de coupelle (38), et l'élément de rotor (32) étant relié fonctionnellement à l'élément à tiroir rotatif (14) par les moyens d'accouplement (28),
**caractérisée en ce que**
les moyens d'accouplement (28) sont constitués par un engrenage à denture, ledit engrenage à denture (28) étant réalisé sous forme d'un engrenage à onde de déformation, l'élément de rotor (32) étant par exemple conçu sous forme d'un générateur d'ondes déformation ayant une forme circonférentielle de préférence elliptique s'écartant d'une forme circulaire, une roue dentée flexible (30, 48) sous forme d'un flexspline avec une denture externe (34) étant prévu sur ledit générateur.

2. Soupape à tiroir rotatif selon la revendication 1, **caractérisée en ce que** l'élément de stator (40) est disposé sur une position d'appui (46) prévue sur la partie de base de coupelle (44).

3. Soupape à tiroir rotatif selon l'une quelconque des revendications précédentes, **caractérisée en ce que** le carter (4) comprend une denture interne (26) avec un nombre de dents différent de la denture externe (34) de la flexspline (30), la flexspline (30) étant reliée de manière non rotative à l'élément à tiroir rotatif (14).

4. Soupape à tiroir rotatif selon l'une quelconque des revendications précédentes, **caractérisé en ce que** l'élément à tiroir rotatif (14) comprend une denture interne (50) avec un nombre de dents différent de la denture externe (34) de la flexspline (48), la denture interne (50) de l'élément à tiroir rotatif (14) s'engrenant avec le denture extérieure (34) de la flexspline (48)

5. Soupape à tiroir rotatif selon la revendication 4, **caractérisée en ce que** le carter (4) comprend des dents internes (26) s'engrènant avec les dents externes (34) de la flexspline (48).

6. Soupape à tiroir rotatif selon l'une quelconque des revendications précédentes, **caractérisée en ce que** le flexspline (30, 48) est supporté sur l'élément de rotor (32) au moyen d'un dispositif de palier (31), tel que par exemple un palier lisse, un roulement à rouleaux ou un roulement d'engrenage.

7. Soupape à tiroir rotatif selon l'une quelconque des revendications précédentes, **caractérisée en ce que** l'élément à tiroir rotatif (14) est au moins supporte de manière rotative dans la partie de base de coupelle (44).
